# EUROPEAN PATENT APPLICATION

(11) **EP 1 708 456 A1**
(43) Date of publication of application: **04.10.2006**
(21) Application number: 06006888.9
(22) Date of filing: 31.03.2006
(51) Int. Cl.: H04L 29/06

(54) **Media burst control system for multimedia, program, recording medium, media server and terminal**

(30) Priority: 31.03.2005 JP 2005102726
(71) Applicant: NEC Corporation, Minato-ku Tokyo (JP)
(72) Inventor: Shiraki, Takashi, Tokyo (JP); Takahashi, Kazuhiro, Tokyo (JP); Ono, Yoshihiro, Tokyo (JP); Kashiwagi, Takehiko, Tokyo (JP)
(74) Representative: Samson & Partner

(57) **Abstract**

The present invention is to provide a media burst control system in a multimedia service using one or more media servers in which the floor is synchronized between the media.

A media burst control server 30 for controlling the floor allocation policy for multimedia is provided independent ot a group of media servers 20 for providing media services. The floor allocation policy for multimedia to be allocated to the group of med:.a servers is stored in a floor allocation policy portion 33 and control is made so as to synchronize the floor of the respective media by a floor allocation judgment portion 32. The floor allocation policy portion 33 is designed to integrate for setting the policies set for respective media servers of the group of media servers 20 or to enter the policy for multimedia from any terminal of the group of terminals 10 or a server such as a presence server 40 or the like.

## Description

### BACKGROUND OF THE INVENTION

The present invention relates to a media burst control system for multimedia, a control program, a program recording medium, a media server and a terminal, more specifically to a media burst control system for multimedia capable of synchronized control of each floor to be provided by one or more media server, a control program, a program recording medium, a media server and a terminal.

It is to be noted that the term "media server" means herein a server for providing any kind of service relating to any medium or a server for controlling such medium. Examples of media servers include a TV telephone server for providing TV telephone services, a PoC (Push to Talk over Cellular) server for providing audio chat services over cellular phones, a White Board server for providing display services of images, an IM (Instant Message) server for providing instant message services, etc.

Also, it is to be noted that the term "floor" means herein a right to transmit media including rights to express one's own opinion through any communication medium, to transmit data, to manipulate applications, or the like. The floor is known as a media transmission right including a right to express one' s own opinion in voice via communication medium, a data transmission right, a right to manipulate applications or the like. The floor is also known as a transmission right, a manipulation right, or the like.

Presently, PoC (Push to talk over Cellular) communication services for providing voice chat services over cellular phones are increasingly popular. The PoC communications are semi-duplex type communication services like a transceiver in which a speaker manipulates a dedicated button for sending his/her voices to a person or persons to whom he/she would like to talk. It is to be noted that the number of terminals to communicate simultaneously is restricted in the PoC communications. This is the reason why the floor is controlled and assigned to a determined speaker. As the number of terminals simultaneously participating a session increases, there is a merit to restrict the number of terminals that can communicate simultaneously.

Also, in any semi-duplex communication medium or even in full duplex communication by itself in which the floor is not controlled, it is sometimes preferable that the floor common to each medium is controlled in case of providing services in multimedia in combination with the PoC communication services. This type of system is disclosed in, for example, a Patent Document 1, i.e., JP2001-75922 A1 (see pages 4-5, Fig. 1)

Moreover, it is preferable that a floor allocation policy set to each media as a multimedia should be a completely new policy, an integration of the existing floor allocation policy for each medium or an arbitrarily edited policy rather than restricting only to the one common to each medium.

However, the conventional technologies have the following problems or drawbacks.

There is no one to synchronize the floor between media in a multimedia communication session using one or more media server. In other words, there existed no means to rewrite or reconstruct floor allocation policy so as to synchronize the floor for each medium by integrating for multimedia the floor allocation policy of each medium set to each media server. That is, the conventional technology had the following problems:

Firstly, it was impossible to provide multimedia services with synchronized floor for a plurality of media. It is effective in multimedia services integrating a plurality of media to provide a synchronized floor for each medium by controlling the floor for each medium regardless of the fact that the floor is controlled or not controlled in each medium.

Secondly, although each medium has a floor allocation policy, there is no function to integrate and to be common the floor policy for multimedia when that for each medium differs from each other. In multimedia services for integrating a plurality of media, it is necessary to be common the floor policy at the time of integrating them as multimedia if the floor policy for each medium differs from one another.

Thirdly, although each medium has a policy for allocating the,floor, there is no function to set a new policy for multimedia at the time of integrating a plurality of media regardless of the policy for each medium or to generate a policy for multimedia by appropriately combining or editing the policies. In multimedia services for integrating a plurality of media, it is necessary to newly enter a floor allocation policy for multimedia or to alter by combining the existing policies.

### SUMMARY OF THE INVENTION

In order to solve the above problems, the media burst control system for multimedia, the program, the recording medium, the media server and the terminal according to the present invention have the following unique constructions:
(1) In transmitting and receiving a plurality of media for multimedia communication based on a floor for the media allocated to each media as a right to transmit the media between one or more media servers and a media terminal or between different media terminals by way of one or more of the media servers,
   a media burst control system for multimedia characterized in performing a synchronization control for integrally allocating the floor of each medium of all media constituting the multimedia communication to either one or more of the media servers or the media terminal for enabling the media servers or the media terminal to which the floor for each medium for multimedia communication is integrally allocated to transmit all media constituting the multimedia.
(2) A media burst control system for multimedia of the above (1), wherein a media burst control server different from the one or more media servers is provided as a parent server for enabling the media burst control server to control the floor for each medium to be provided by the one or more media servers corresponding to baby servers for synchronization control.
(3) A media burst control system for multimedia of the above (1), wherein either one of the one or more media servers acts as the parent server and each of the media servers acting as the baby servers controls the floor for each medium that is provided thereby for synchronization control.
(4) A media burst control system of above (2) or (3), wherein the baby servers follow the floor control of the parent server for performing the media services.
(5) A media burst control system for multimedia of either one of the above (2) - (4), wherein the media terminal initiates transmission of a desired media based on the floor control of the parent server.
(6) A media burst control system for multimedia of either one of the above (2) - (5), wherein the parent server integrates the floor allocation policies set to the baby servers for setting the floor allocation policy for multimedia, thereby cont rolling the floor for each medium for synchronized control.
(7) A media burst control system for multimedia of the above (6), wherein a floor allocation policy common to each medium is set at the time of integrating by the parent server the floor allocation policies set to the baby servers into the floor allocation policy for multimedia.
(8) A media burst control system for multimedia of either one of the above (2) - (5), wherein the parent server properly edits the floor allocation policies set to the baby servers to set a floor allocation policy for multimedia and controls the floor for each medium provided by the baby servers for synchronized control.
(9) A media burst control system for multimedia of either one of the above (2) - (5), wherein the parent server sets a new floor allocation policy for multimedia independent from presence or absence of the floor allocation policy set to the baby servers and controls the floor for each medium provided by the baby servers for synchronized control.
(10) A media burst control system for multimedia of either one of the above (6) - (9), wherein the media terminal is used as input means for setting the floor allocation policy for multimedia to the parent server and enters the floor allocation policy for multimedia to the parent server.
(11) A media burst control system for multimedia of either one of the above (6) - (9), wherein an operator terminal operated by an operator for managing the media services is used as input means for setting the floor allocation policy for multimedia tc the parent server and enters the floor allocation policy for multimedia to the parent server.
(12) A media burst control system for multimedia of either one of the above (6) - (9), wherein the baby servers or any optional server different from the baby servers are used as input means for setting the floor allocation policy for multimedia to the parent server and enter the floor allocation policy for multimedia to the parent server.
(13) A media burst control system for multimedia of either one cf the above (2) - (12), wherein a media portal constituting a portal site for media is disposed between the media terminal and the baby servers and/or the parent server so that any access of the media terminal to the baby servers and/or the parent server is achieved by way of the media portal.
(14) A media burst control system for multimedia of either one of the above (2) - (13), wherein a presence server that holds at least presence information of the media terminal is disposed so that the parent server sets the floor allocation policy with reference to the information from the presence server.
(15) In transmitting and receiving a plurality of media for multimedia communication between a media server and a plurality of media servers including the first mentioned media server or between different media terminals by way of the media server and the plurality of media servers including the media server based on the floor of the media allocated thereto as the right for transmitting media,
   a media server characterized in that a synchronized control is performed for integrally allocate the floor for each medium to either the media server or the plurality of media servers including the media server or the media terminal with respect to all media constituting the multimedia communication including the media corresponding to the media server, the synchronized control enables to transmit all media constituting the multimedia or the media corresponding to the media server in case when the floor for each medium of the multimedia communication is integrally allocated to the media server or the plurality of media servers including the media server, while enabling to receive all media constituting the multimedia or the media corresponding to the media server when the floor for each medium of the multimedia communication is integrally allocated to the media terminal.
(16) A media server of the above (15), wherein a media burst control server for controlling the floor for each medium is disposed for operating as a baby server with the control of the floor for each medium and under synchronized control by the media burst control server.
(17) A media server of the above (15), wherein means for controlling the floor for each medium is provided as a parent server and managing for synchronous control the floor for each medium provided by each media server acting as a baby server.
(18) A. media server of the above (17), wherein the floor for each medium is controlled and synchronously controlled to operate as a baby server under floor control of the parent server.
(19) A media server of either one of the above (16) - (18), wherein the parent server integrates the floor allocation policies set to the baby servers for setting the floor allocation policy for multimedia, thereby controlling the floor for each medium for synchronous control.
(20) A media server of the above (19), wherein the parent server sets a floor allocation policy common to each medium in case of the parent server integrating the floor allocation policies set to the baby servers into a floor allocation policy for multimedia.
(21) A media server of either one of the above (16) - (18), wherein the parent server properly edits the floor allocation policies set to the baby servers to set as a floor allocation policy for multimedia and controls the floor for each medium provided by the baby servers for synchronized controlling.
(22) A media server of either one of the above (16) - (18), wherein the parent server sets a new floor allocation policy for multimedia regardless of the floor allocation policies set to the baby servers and controls the floor for each medium provided by the baby servers for synchronous controlling.
(23) A media server of either one of the above (19) - (22), wherein the media terminal enters a floor allocation policy for multimedia to the parent server as input means for setting the floor allocation policy for multimedia to the parent server.
(24) A media server of either one of the above (19) - (22), wherein an operator terminal operated by an operator for controlling the media services is used to input the floor allocation policy for multimedia as input means for setting the floor allocation policy for multimedia to the parent server.
(25) A media server of either one of the above (19) - (22), wherein the baby servers or any optional server different from the baby servers are used as input means for setting the floor allocation policy for multimedia to the parent server and enter the floor allocation policy for multimedia to the parent server.
(26) A media server of either one of the above (16) - (25), wherein a media portal is disposed between the media terminal and the baby terminals and/or the parent server and any access from the media terminal to the baby terminals and/or the parent terminal is realized by way of the media portal.
(27) A media server of either one of the above (16) - (26), wherein a presence server holding at least presence information of the media terminal is disposed and the parent server sets the floor allocation policy for multimedia with reference to the information from the presence server.
(28) In transmitting and receiving a plurality of media for multimedia communication between one or more media server and a media terminal or between different terminals different from the media terminal by way of the media server based on a floor for media allocated to each medium as a right to transmit the media,
   a media terminal characterized in that a synchronous control is performed for integrally allocating the floor for each medium to the one or more of the media servers or the media terminal with respect to all media constituting the multimedia communication, and the synchronous control enables to transmit all media constituting the multimedia if the floor for each medium of the multimedia communication is integrally allocated to the media terminal, while receiving all of the media constituting the multimedia if the floor for each medium of the multimedia communication is integrally allocated to the media server.
(29) A media terminal of the above (28), wherein a floor for each medium provided by the one or more media servers is controlled and transmission of desired media to baby terminals from the one or more media servers is initiated based on the floor control from a parent server for performing a synchronous control.
(30) A media terminal of the above (29), wherein instructions are enabled to be entered to the parent server for integrating the floor allocation policies set to the baby servers as the floor allocation policy for multimedia.
(31) A media terminal of the above (29), wherein a floor allocation policy common to each medium is enabled to be entered to the parent server as the floor allocation policy for multimedia
(32) A media terminal of the above (29), wherein the floor allocation policies for media set to the baby servers are properly edited as the floor allocation policy for multimedia and entered to the parent server.
(33) A media terminal of the above (29), wherein the floor allocation policy for multimedia is enabled to be entered to the parent server independent from the floor allocation policies set to the baby servers.
(34) A media terminal of either one of the above (28) - (33), wherein the baby servers and/or the parent server are accessed by way of a media portal that acts as a portal site for media disposed between the baby servers and/or the parent server.
(35) A media burst control program for multimedia for realizing the processing of media burst control for multimedia of either one of the above (1) - (34) in a computer executable program.
(36) A program storage medium for storing the media burst control program for multimedia of the above (35) in a computer readable storage medium.

The present invention exhibits the following practical advantages:

Firstly, it is possible to integrate the floor of a plurality of media each having of different floor and to effectively provide a synchronized floor allocation because of the provision of a media burst control server as a parent server for integrally controlling the floor of media that are provided by one or more media server or by allowing either one of the media servers to integrally control as a parent server the floor of all media servers. Accordingly, in case of providing multimedia services, it is possible to provide a synchronized floor for media to be provided by media servers.

Secondly, it is possible to integrate floor allocation policies for media that have been set to multimedia servers or to enter a new policy as a policy for multimedia that integrates policies for media in such a manner to be common the floor allocation policies for the media, thereby allocating a synchronized floor for the media in harmonize with the entered policy.

Thirdly, it is possible to integrate floor allocation policies for respective media that have been set to media servers and to set a floor allocation policy for multimedia communication. Independently from the floor allocation policies for respective media that have been set for the media servers, it is also possible to enter a new or edited floor allocation policy for multimedia from a media terminal, an operator terminal, a media server, a presence server or the like, thereby enabling synchronized floor allocation for respective media in harmonizing with the entered policy.

### BRIEF DESCRIPTION OF THE DRAWINGS

In the accompanied drawings,
Fig. 1 is a system configuration of one embodiment of the media burst control system for multimedia according to the present invention;
Fig. 2 is a flowchart for describing a former half of the operation of the one embodiment of the media burst control system for multimedia according to the present invention;
Fig. 3 is a flowchart for describing a later half of the operation of the media burst control system according to the present invention subsequent to the flowchart as shown in Fig. 2.

### DESCIPTION OF PREFERRED EMBODIMNETS

Now, descriptions will be made on a preferred embodiment of the media burst control system for multimedia, the control method, the control program, the program recording medium, the media server and the terminal according to the present invention with reference to the accompanied drawings. It is to be noted that one embodiment of the media burst control system for multimedia according to the present invention will be described hereunder. Embodiments of the multimedia server and the terminal constituting the media burst control system for multimedia as well as an embodiment of the media burst control method for multimedia according to the present invention will be understood easily from the following description on the media burst control system for multimedia according tc the present invention. Similarly, easily understood are the media burst control program for multimedia that implements the media burst control method for multimedia as a computer executable program as well as recording the media burst control program for multimedia in a computer readable manner. Accordingly, further descriptions on these inventions will be abbreviated herein.

### (System Configuration)

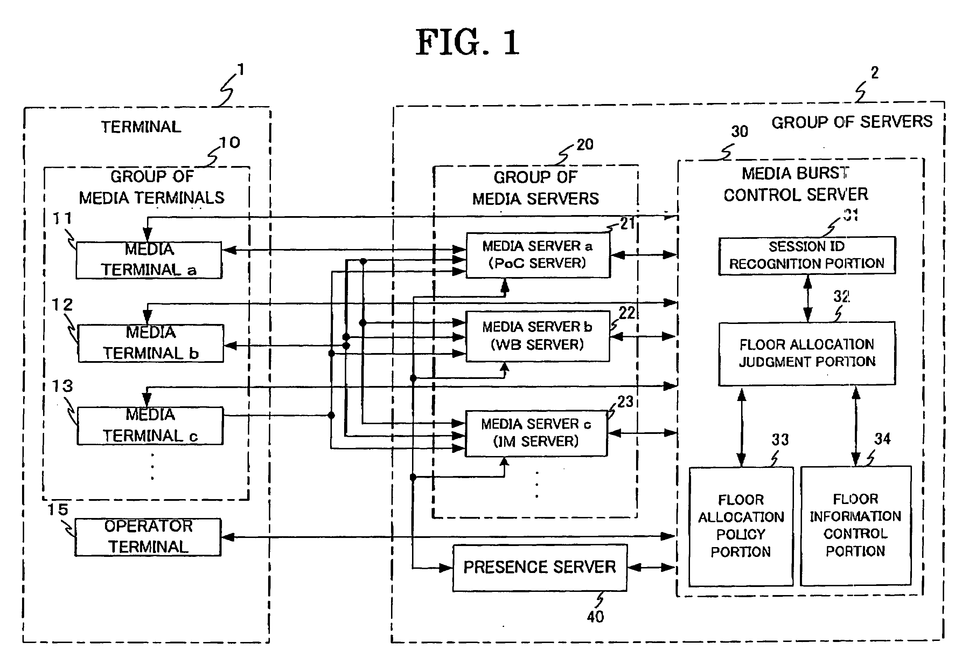

Fig- 1 is a system configuration of one embodiment of the media burst control system for multimedia according to the present invention. The media burst control system for multimedia as shown in Fig. 1 comprises a group ot terminals 1 and a group of servers 2 which are interconnected by way of network (not shown).

The group of servers 2 comprise at least a group of media servers 20 including a media server a21, a media server b22, a media server c23, etc., each providing media services, a media burst control server 30 as a parent server for controlling the floor for the media that are provided by the media servers of the group of media servers 20, and a presence server 40 for managing presence information (i.e., present condition) of each media server and each terminal.

It is to be noted that each of the media servers a21, b22, c23, etc. is a server that is designed to send and receive one or more media and manage them in addition to control the floor for the media in case of media for controlling the floor. The media burst control server 30 for controlling the floor for each medium as the parent server has a function to control the floor for a multimedia session in connection with media for each media server at the time when it provides multimedia services using one or more media servers a21, b22, c23, etc. as baby servers. On the other hand, the presence server 40 holds presence information of each media terminal such as online/offline refuse-to-receive, position information, etc.

On the other hand, the terminal 1 comprises at least a group of terminals (i.e., service providing terminals) 10 including a media terminal all, a media terminal b12, a media terminal c13, etc. for providing media services to the user(s) of the group of media servers 20, i.e., media server a21, b22, c23, etc. and an operator terminal 15 that is designed for the operator to exchange information on the floor with the media burst control server 30.

It is to be noted that the media terminals all, b12, c13, etc. receive one or more media services from one or more media servers selected from the group of media servers 20, thereby enabling to present media services to the user and providing multimedia services to the users. Moreover, it enables the media terminals a11, b12, c13, etc. to enter the allocation policy on the floor by each media server in the group of media servers 20 as well as the media burst control server 30.

On the other hand, the operator terminal 15 is a terminal used by an operator or an administrator for the multimedia services and is designed to enter the floor allocation policy for the media burst control server 30. It is to be noted here that the operator terminal 15 can be used as a terminal for exchanging information not only with the media burst control server 30 but also with other servers (i.e., the media servers a21, b22, c23, etc. and the presence server 40).

Also shown in Fig. 1 is a detailed internal construction of the media burst control server 30.

When receiving a media floor acquisition request from either one of the media server a21, b22, c23 or the like of the group of media servers 20, a session ID recognition portion 31 is designed to recognize the requested session and outputs the corresponding session ID.

A floor allocation judgment portion 32 makes a judgment if it is possible to set the floor allocation for the session ID entered from the session ID recognition portion 31.

A floor allocation policy portion 33 integrally controls the floor for each medium provided by each media server a21, b22, c23 or the like. Upon receiving the session ID from the floor allocation judgment portion 32, the floor allocation policy portion 33 allocates the floor allocation policy on the requested session and sends it to the floor allocation judgment portion 32.

A floor information control portion 34 is designed to store waiting queue information for requested information, a history of the floor allocations, contents of the current floor allocation and the like.

It is to be noted here that the floor allocation policy for respective media that is integrally controlled by the floor allocation policy portion 33 may be set by integrating the floor allocation policies already set for respective media servers a21, b22, c23 and the like as one for multimedia. Alternatively, a common policy for each medium may be set at the time of integration (for example, in case of a multimedia service of media A and media B, the policy for the media A is prioritized than that for the media B).

Alternatively, it is possible to set a policy by properly editing the floor allocation policies already set to respective media or to set a completely new policy regardless of the already set floor policies. Moreover, it is possible to set a policy for multimedia with reference to the information from the presence server 40 that manages at least presence information of the media terminals a11, b12, c13, etc.

The floor allocation policy that is integrally controlled by the floor allocation policy portion 33 may be set by entering from the operator terminal 15 that is operated by the operator or the administrator for the multimedia services. Alternatively, it is possible to set by entering from the media terminal a11, b12, c13 or the like for providing media services to the users or by entering from any other server including the presence server 40 for managing the presence information of each media terminal or the media servers a21, b22, c23 and the like acting as the baby servers of the presence server 40.

It is to be noted that, in the media burst control system for multimedia as shown in Fig. 1, the floor for the media provided by 1 or more media servers are integrally managed to act as a parent server for synchronously controlling the floor for respective media. The media burst control server 30 is provided separately from the group of the media servers 20, or respective media servers a21, b22, c23 and the like. And the media burst control system is designed to control the floor to be allocated to respective media provided by the respective media servers a21, b22, c23 and the like acting as baby servers, thereby synchronizing the floor.

However, it may be possible to give the function on the floor allocation of the media burst control server 30 to either one of the media servers a21, b22, c23 or the like of the group of media servers 20 so that the media server to which the floor allocation function is given acts as a parent server with regard to the floor allocation for integrally controlling the floor of each medium that the media server provides as a baby server, thereby enakling the synchronous control of each media. It is to be noted here that the media server acting as the parent server itself has a function to provide media and the media providing function of its own media server is considered as a baby server for enabling the floor on the media of the media server to be controlled by the function of the floor.

Furthermore, instead of integrally controlling the floor by a particular server, it is possible to synchronize the floor among the media servers that provide related media by exchanging information on floor allocation policy.

In any one of the above server configurations, media servers in the position of the baby server must follow the floor control of the parent server so that the floor allocation is controlled in a synchronized relationship among media to achieve multimedia services. Similarly, in any one of the above server configurations, the media terminal a11, b12, c13 or the like is controlled to initiate transmission operation on desired media by using any designated one of the media servers acting as baby servers subsequent to the floor allocation based on the media burst control of the parent server.

Although not shown in the drawing, it is to be noted that a network is in existence for interconnecting between the terminal 1 (for example, the group of media terminals 10, the operator terminal 15 or the like) and the group of servers 2 (for example, the group of media servers 20, the media burst control server 30 or the presence server 40), or between the servers in the group of servers 20 (for example, between the group of media servers 20 and the media burst control server 30, between the media burst control server 30 and the presence server 40, etc.). Additionally, it is possible to provide through a network a media portal acting as a portal site for media (i. e., a server provided with search means on each media) between the group of terminals 1 and the group of servers 2, or between the servers in the group of servers 2, thereby enabling to gain access through the media portal at the time of accessing each of the media servers in the group of media servers 20 from, for example, either one of the group of media terminals 10.

### (Outline of operation)

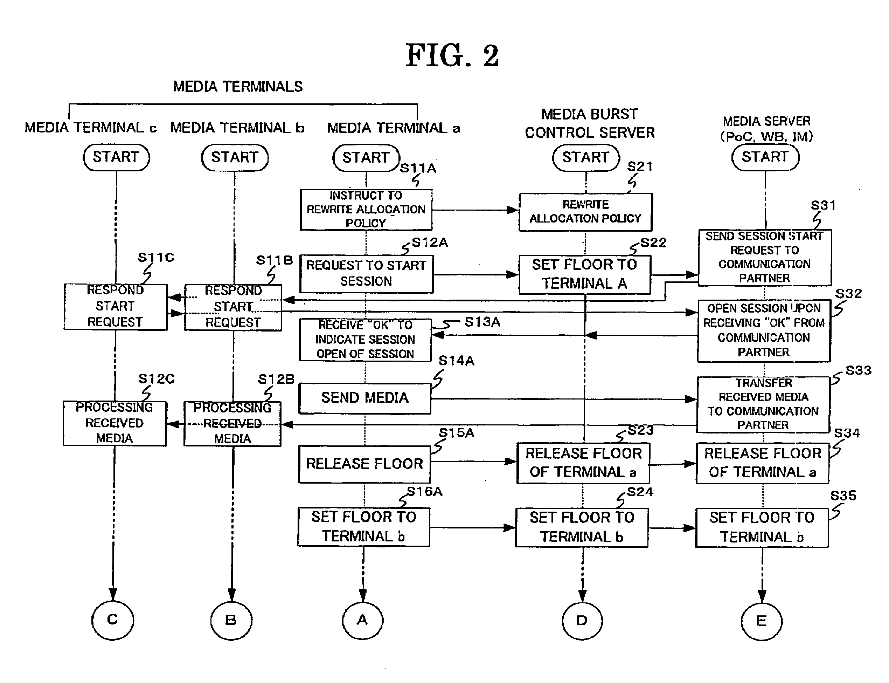

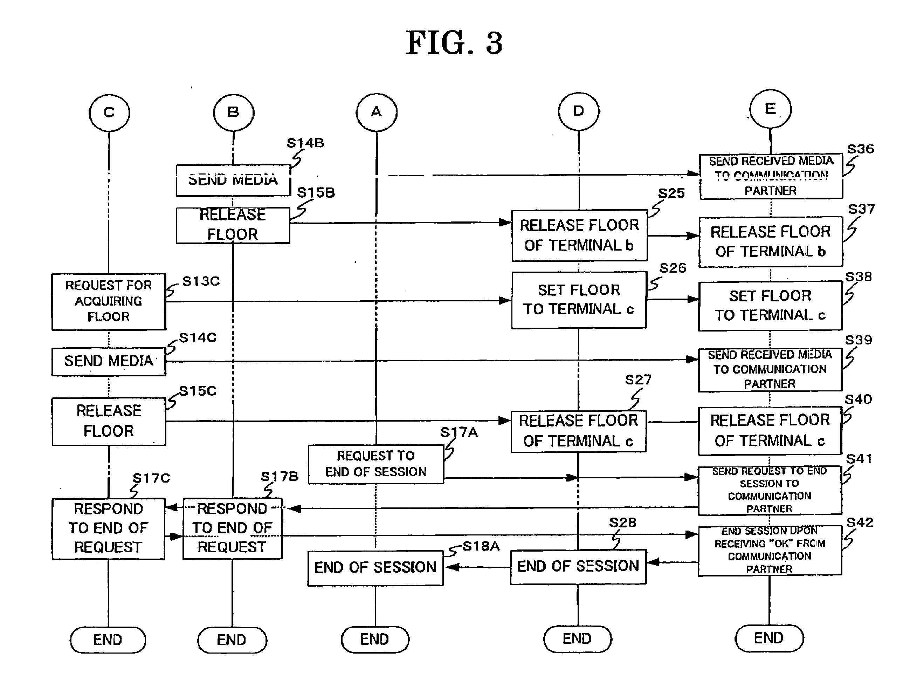

Now, an operation of the media burst control system for multimedia as shown in Fig. 1 will be described in detail. Fig. 2 is a flowchart to show one embodiment of a former half of the operation of the media burst control system for multimedia according to the present invention. Fig. 3 is a flowchart to show one embodiment of the operation of the media burst control system for multimedia, which is the latter half subsequent to the operation in Fig. 2.

It is to be noted in the following description that, for example, the media server a21 in the group of media servers 20 is a PoC (Push to Talk over Cellular) server to provide audio chat services over a cellular phone, the media server b22 is a WB (White Board) server to provide display services on a graphic display screen and the media server c23 is an IM (Instant Message) server to provide instant message services.

The PoC server 21 and the WB server 22 are media servers each having an independent floor for media which is controlled within the respective media server 21 or 22. As for the floor allocation policy for the PoC media in the PoC server 21, if no floor allocation policy is granted when a floor acquisition request is entered from either one of the media terminals all, b12, c13 or the like in the group of media terminals 10, it is set to allocate the floor to the media terminal that sent the floor acquisition request.

On the other hand, the floor allocation policy for the WB media in the WB server 22 is set in such a manner that any media terminal, for example, the media terminal all requesting initiation of session first acquires the floor and then the media terminal a11 requesting initiation of session allocates the floor to media terminals appointed time to time. It is to be noted that the IM server 23 is a media server having no floor for IM media by itself.

Also, it is to be noted in the floor allocation policy portion 33 in the media burst control server 30 that the floor allocation policy is set in advance in the priority order of the PoC media and the WB media. However, any terminal, for example, the media terminal all or the operator terminal 15 that requests provision of multimedia services both of PoC and WB is able tc instruct the floor allocation policy portion 33 for changing the priority order to WB media and PoC media. Moreover, as described hereinabove, it is possible to eliminate the preset floor allocation policy or to set a new policy.

In the flowchart as shown in Fig. 2, the media terminal all that is going to start a session to enjoy multimedia services using three of the PoC, WB and IM services instructs the floor allocation policy portion 33 in the media burst control server 30 to change the priority order of allocation to, for example, WB media and PoC media prior to starting the session (step S11A). Upon receiving the instructions to change the priority order, the floor allocation policy portion 33 in the media burst control server 30 checks rationality of the instructions. If it is determined that the change instructions are executable, the change is made and saves the changed allocation policy (step S21) . As for the rationality check in the media burst control server 30 is not limited to check if any inconsistency in the change instructions but also check if it is in the condition to acquire presence information or the like of the of the media terminal all from the presence server 40 and send transmission of the change instructions.

If the media terminal all that sends the session initiation request appoints the media terminal to which the floor is allocated as a result of changing of the allocation policy in step S21, the appointed media terminal holds the floor. On the other hand, if the media terminal all makes no appointment . the floor will be allocated based on the policy on PoC media that is set to the PoC server 21.

After making the above setting on the floor, the media terminal all makes a session initiation request for integrated multimedia services of PoC services, WB services and IM services between the media terminal b12 and c13 that are appointed by the media terminal all and such message is sent to the media burst control server 30 (step S12A). This session is referred to as "session A" below. The media burst control server 30 synchronizes the floor for all of the media relating to the "session A" and first sets the floor to the media terminal all that is the origin of the session initiation request (step S22) .

The PoS server 21, the WB server 22 and the IM server 23 that received the session initiation request for the integrated multimedia services relating to the "session A" send the session initiation request for the integrated multimedia services to the media terminals b12 and c13 that are appointed as communication partners (step S31) . The media terminals b12 and c13 that received the session initiation request respond by sending "OK" signals indicating that the terminals are able to start the session if they are able to start the session (steps S11B, S11C).

Upon receiving the "OK" signal from each of the media terminals b12 and c13, the PoC server 21, the WB server 22 and the IM server 23 open up the "session A" for the integrated multimedia services and the floor is first set to the media terminal all that is the origin of initiation request under control of the parent server, or the media burst control server 30 (step S32) . Subsequently, an "OK" signal indicating that the session has been set is sent back to the media burst control server 30 as well as the media terminal all that is the origin of the initiation request. It is to be noted in the media burst control server 30 that the processing in step S22 for first setting the floor to the media terminal all that is the origin of the session initiation request may be formally carried out at the time when the "OK" signals are received from the PoC server 21, the WB server 22 and the IM server 23.

Upon receiving the "OK" signals from the media servers (i.e., PoC server 21, the WB server 22 and the IM server 23) (step S13A), the media terminal all that originates the session initiation request sets the end-to-end session connection for the "session A" to perform multimedia services of PoC service, WB service and IM service between the three media terminals a11, b12 and c13.

Upon setting the "session A", the media terminal all that originates the session initiation request first holds the floor to talc by way of the PoC media, draw images by way of the WB media and generate texts by way of the IM media and sends desired one or more media (step S14A) . The corresponding media server (the PoC server all, the WB server 12 or the IM server c13) transfers the received media (voice, images, texts or the like) to the media terminals b12 and c13 (step S33) . The media terminals b12 and c13 that received the media (voice, image or texts) transmitted thereto from the corresponding media servers (i.e., the PoC server 21, the WB server 22 and the IM server 23) perform such processing as saving, displaying or printing of the received media (steps S12B and S12C).

Then, the media terminal all that completed the transmission releases the floor (step S15A). When the session ID recognition portion 31 in the media burst control server 30 recognizes the release of the floor in the "session A", such message is sent to the floor allocation judgment portion 32. The floor allocation judgment portion 32 sets the condition at the time when the floor in the "session A" is released, all of the media servers having the floor, i.e., the PoC server 21, the WB server 22 are requested to release the floor and such fact is recorded in the floor information control portion 34 (step S23). The PoC server 21 and the WB server 22 that are notified to release the floor in the "session A" of the media terminal all release the floor of the media terminal all for the "session A" (step S34).

It is to be noted in step S23 and step S34 that the "OK" signal is preferably sent back to the requestor to indicate that the release of the floor has been normally completed by the media burst control server 30, the PoC server 21 and the WB server 22.

The media terminal a11, then, instructs the media burst control server 30 so that the media terminal b12 holds the floor (step S16A). And the session ID recognition portion 31 recognizes that the appointment is for the "session A" and transmits a message to the floor allocation judgment portion 32 for notifying that a request to allocate the floor for the "session A" to the media terminal b12 has been made by the media terminal a11.

As described hereinabove, since the floor allocation is the most prioritized policy set to the floor allocation policy portion 33, the floor allocation judgment portion 32 determines that the floor for all media for the "session A" is held by the media terminal b12 and notifies the fact to all media servers, i.e., the PoC server 21 and the WB server 22 that hold the floor and the message is recorded in the floor control portion 34 (step S24) . The PoC server 21 and the WB server 22 that received the notification from the media burst control server 30 set the floor for the "session A" to the media terminal b12 to which the floor setting has been appointed by the media terminal all (step S35).

Accordingly, the media terminal b12 becomes a new holder of the floor for the "session A" and is able to transmit three media, i.e., PoC, WB and IM. If the media terminal b12 transmit either or more of PoC, WB and IM (step S14A), the corresponding media servers (the PoC server 21, the WB server 22 and the IM server 23) transfer the media (sounds, images, texts and the like) received from the media terminal b12 to the media terminals a11 and c13 that are communication partners (step S36). The communication partners or the media terminals a11 and c13 that received the media (sounds, images, texts and the like) transferred from the media servers (the PoC server 21, the WB server 22 and the IM server 23) perform such processing as storage, display, printing or the like of the received media (not shown in Fig. 3).

Upon completing transmission of media by the media terminal b12, the media terminal b12 releases the floor (step S15B). Then, the session ID recognition portion 31 of the media burst control server 30 recognizes that the floor for the "session A" has been released and transmits the,message to the floor allocation judgment portion 32. The floor allocation judgment portion 32 sends a message to all media servers, or the PoC server 21 and the WB server 22 asking for releasing the floor and such message is recorded in the floor information control portion 34 (step S25). The PoC server 21 and the WB server 22 that are notified the release of the floor of the media terminal b12 for the "session A" release the floor of the media terminal b12 in the "session A" (step S37) .

It is to be noted in step S24 and step S35 that, if the floor setting is made by the media burst control server 30, the PoC server 21 and the WB server 22, it is possible to return to the requestor an "OK signal" indicating that the floor setting has been completed normally, or in step S25 and step S37, if the media burst control server 30, the PoC server 21 and the WB server 22 release the floor, it is possible to return to the requestor an "OK" signal indicating that the floor release has been made normally.

Now, a description will be made in a case where the media terminal all appoints the media burst control server 30 so that any media terminal has the floor. When the media terminal all is not appointed to allocate the floor to any media terminal, for example the media terminal c13 requests to the media burst control server 30 for acquisition of the floor for the "session A" (step 13C). The session ID recognition portion 31, then, recognizes an appointment for the "session A" and transmits a message to the floor allocation judgment portion 32 to notify that the floor acquisition request for the "session A" has been made by the media terminal c13.

After confirming that there is no appointment from the media terminal all that is the prioritized policy set by the floor allocation policy portion 33, the floor allocation judgment portion 32 determined that the media terminal c13 that is the origin of the acquisition request holds the floor for all of the media in the "session A", such decision is transmitted to all media servers having the floor, i.e., the PoC server 21 and the WB server 22 and such decision is recorded in the floor control portion 34 (step S26). The PoC server 21 and the WB server 22 that received the notification from the media burst control server 30 set the floor in the "session A" to the media terminal c13 to which the floor setting is appointed by the media terminal all (step S38).

Thereafter, the media terminal c13 holds the floor in the "session A", thereby enabling to transmit three media, i.e., PoC, WB and JM. When the media terminal c13 transmits either one or more of PoC, WB and IM (step S14B), the corresponding media servers (i.e., the PoC server 21, the WB server 22 and the IM server 23) transfer the media (sounds, images, texts and the like) received from the media terminal c13 to the communicaticn partners, or the media terminal all, b12 (step S39) . Although not shown in Fig. 3, the media terminals all and b12 that received the media (sounds, images, texts and the like) transferred from the corresponding media servers (PoC server 21, the WB server 22 and the IM server 23) perform such processing as storage, display or printing of the received data.

Upon completing media transmission of the media terminal c13, it releases the floor (step S15C). The session ID recognition portion 31 of the media burst control server 30, then, recognizes the release of the floor in the "session A" and a message for notifying such fact is sent to the floor allocation judgment portion 32. The floor allocation judgment portion 32 sends instructions to all media servers, i.e., the PoC server 21 and the WB server 22 holding the floor to release the floor and such message is recorded in the floor information control portion 34 (step S27). The PoC server 21 and the WB server 22 that are instructed to release the floor in the "session A" of the media terminal c13 release the floor of the media terminal c13 in the "session A" (step S40).

It is to be noted in step S26 and step S38 that an "OK" signal to indicate that the setting of the floor has been normally completed may be sent to the requestor at the time when the media burst control server 30, the PoC server 21 and the WB server 22 set the floor. Moreover, in step S27 and step S40, an "OK" signal may be sent back to the requestor to indicate that the release of the floor has been normally completed at the time where the media burst control server 30, the PoC server 21 and the WB server 22 release the floor.

In the above manner, the multimedia communication services between the media terminals a11, b12, C13 and the like are performed while synchronizing the floor between media under control of the floor by the media burst control server 30 as a parent server. However, at the time of completing the multimedia communication services, an end of session is requested from the media terminal all that requested the start of session of the "session A" and the fact is notified to the media burst control server 30 (step S17A).

The PoC server 21, the WB server 22 and the IM server 23 that received the request for the end of session sends the end of session request for the "session A" to the media terminal b12 and c13 that are appointed as communication partners (step S34) . The media terminals b12 and c13 that received the end of session request sends back an "OK" signal as a response signal if the terminals are able to terminate the session (step S17B and step S17C).

Upon receiving the "OK" signal from the media terminals b12 and c13, the PoC server 21, the WB server 22 and the IM server 23 terminate the "session A" for multimedia services (step S42) . Subsequently, an "OK" signal indicating that the session has been terminated is sent back to the media burst control server 30 as well as to the media terminal all that is the requestor for the end of session. The media burst control server 30 makes the session for the "session A" into the terminated condition and release the floor control condition for the "session A" (step S28) and the media terminal all performs processing for terminating the session (step S18A). As a result, the "session A" for the integrated multimedia communication services between the media terminals a11, b12, c13 and the like will terminate completely. It is to be noted that the processing in step S28 for setting the session termination condition in the media burst control server 30 may be performed at the time when the end of session request is received from the media terminal all.

As described hereinabove in detail, the media burst control server 30 as shown in Fig. 1 integrally manage the floor for media of the media servers a21, b22, c23 and the like that the floor are to be synchronized for each session of multimedia, thereby enabling to allocate the floor by synchronizing between media to be used for multimedia. As described hereinabove, in the floor allocation policy portion 33 of the media burst control server 30, either one of the floor allocation policy of each media server a21, b22, c23 or the like and allocation policy entered from the media terminal a11, b12, c13 or the like, the operator terminal 15, any optional server or the like is used to generate the floor allocation policy for multimedia and the result is saved. Accordingly, based on the current policy for each session in the floor allocation policy portion 33, the floor for each media in a multimedia communication session used by one or more media servers that the floor allocation judgment portion 32 is allocated and the result of allocation is recorded in the floor information control portion 34.

Based on the floor allocation policy set to the floor allocation policy portion 33 in the media burst control server 30, the floor for the media corresponding to one or more media servers a21, b22, c23 and the like is allocated in such a manner that the floor for each media to be integrated is synchronized as a session for multimedia services. As described hereinabove, the floor allocation policy can be set by integrating the policies that are already set to media servers a21, b22, c23 and the like and the policy that is entered from each media terminal a11, b12, c13 or the like, the operator terminal 15 or any optional server. Similar to the embodiment as described hereinabove, it is possible to allocate the synchronized floor of the three media of, for example, PoC, WB and IM.

In the above manner, according to, for example, the media burst control server 30 of the present invention, there is provided effective means for integrally managing and synchronously controllinq the floor of a plurality of media to be used for multimedia, thereby integrally performing the allocation of the floor for sessions for multimedia to be synchronized based on the policy that are already set to each media server or the policy that is entered from the operator terminal or any optional terminal.

It is to be noted that the present invention can be applied not only to the abovementioned multimedia services integrating the three media of PoC, WB and IM but also to cases using any other media regardless of the fact that the floor is held by each media server that provides media, thereby providing multimedia services with synchronized floor between media.

In case of a session using two media services of, for example, the PoC server 21 and the WB server 22 or a session using two media servers of the PoC server 21 and the IM server 23, the present invention may also be applied to any case of providing media services including those not shown in the above embodiment such as a case that uses a TV telephone server to provide a TV telephone service.

The media servers such as the PoC server 21, the WB server 22, the IM server 23, the TV telephone server and the like may separately hold the floor or may not hold the floor. Moreover, even if a media server to provide a media service may be already installed or may be newly installed, the present invention may be easily applied as long as information on the floor can be exchanged between itself and the media burst control server 30.

The construction of the preferred embodiments of the present invention has been described hereinabove. However, it is to be noted that the embodiments are simply nothing but examples of the present invention and should not be interpreted to restrict the present invention. It is easily understood for a person having an ordinary skill in the art that various modifications and alternations can be made in accordance with particular applications without departing from scope and spirit of the present invention.

## Claims

1. In transmitting and receiving a plurality of media for multimedia communication based on a floor for the media allocated to each media as a right to transmit the media between one or more media servers and a media terminal or between different media terminals by way of one or more of the media servers,
a media burst control system for multimedia **characterized in** performing a synchronization control for integrally allocating the floor of each media of all media constituting the multimedia communication to either one or more of the media servers or the media terminal for enabling the media servers or the media terminal to which the floor for each media for multimedia communication is integrally allocated to transmit all media constituting the multimedia.

2. A media burst control system for multimedia of claim 1, wherein a media burst control server different from the one or more media servers is provided as a parent server for enabling the media burst control server to control the floor for each media to be provided by the one or more media servers corresponding to baby servers for synchronization control.

3. A media burst control system for multimedia of claim 1, wherein either one of the one or more media servers acts as the parent server and each of the media servers acting as the baby servers controls the floor for each media that is provided thereby for synchronization control.

4. A media burst control system of claim 2 or 3, wherein the baby servers follow the floor control of the parent server for performing the media services.

5. A media burst control system for multimedia of either one of claims 2 - 4, wherein the media terminal initiates transmission of a desired media based on the floor control of the parent server.

6. A media burst control system for multimedia of either one of claims 2 - 5, wherein the parent server integrates the floor allocation policies set to the baby servers for setting the floor allocation policy for multimedia, thereby controlling the floor for each medium for synchronized control.

7. A media burst control system for multimedia of claim 6, wherein a floor allocation policy common to each medium is set at the time of integrating by the parent server the floor allocation policies set to the baby servers into the floor allocation policy for multimedia.

8. A media burst control system for multimedia of either one of claims 2 - 5, wherein the parent server properly edits the floor allocation policies set to the baby servers to set a floor allocation policy for multimedia and controls the floor for each media provided by the baby servers for synchronized control.

9. A media burst control system for multimedia of either one of claims 2 - 5, wherein the parent server sets a new floor allocation policy for multimedia independent from presence or absence of the floor allocation policy set to the baby servers and controls the floor for each media provided by the baby servers for synchronized control.

10. A media burst control system for multimedia of either one of claims 6 - 9, wherein the media terminal is used as input means for setting the floor allocation policy for multimedia to the parent server and enters the floor allocation policy for multimedia to the parent server.

11. A media burst control system for multimedia of either one of claims 6 - 9, wherein an operator terminal operated by an operator for managing the media services is used as input means for setting the floor allocation policy for multimedia to the parent server and enters the floor allocation policy for multimedia to the parent server.

12. A media burst control system for multimedia of either one cf claims 6 - 9, wherein the baby servers or any optional server different from the baby servers are used as input means for setting the floor allocation policy for multimedia to the parent server and enter the floor allocation policy for Multimedia to the parent server.

13. A media burst control system for multimedia of either one of claims 2 - 12, wherein a media portal constituting a portal site for media is disposed between the media terminal and the baby servers and/or the parent server so that any access of the media terminal to the baby servers and/or the parent server is achieved by way of the media portal.

14. A media burst control system for multimedia of either one of claims 2 - 13, wherein a presence server that holds at least presence information of the media terminal is disposed so t.hat the parent server sets the floor allocation policy with reference to the information from the presence server.

15. In transmitting and receiving a plurality of media for multimedia communication between a media server and a plurality of media servers including the first mentioned media server or between different media terminals by way of the media server and the plurality of media servers including the media server based on the floor of the media allocated thereto as the right fcr transmitting media,
a media server **characterized in that** a synchronized control is performed for integrally allocate the floor for each medium to either the media server or the plurality of media servers including the media server or the media terminal with respect to all media constituting the multimedia communication including the media corresponding to the media server, the synchronized control enables to transmit all media constituting the multimedia or the media corresponding to the media serves in case when the floor for each media of the multimedia communication is integrally allocated to the media server or the plurality of media servers including the media server, while enabling to receive all media constituting the multimedia or the media corresponding to the media server when the floor for each medium of the multimedia communication is integrally allocated to the media terminal.

16. A media server of claim 15, wherein a media burst control server for controlling the floor for each medium is disposed for operating as a baby server with the control of the floor for each medium and under synchronized control by the media burst control server.

17. A media server of claim 15, wherein means for controlling the floor for each medium is provided as a parent server and managing for synchronous control the floor for each medium provided by each media server acting as a baby server.

18. A media server of claim 17, wherein the floor for each medium is managed and synchronously controlled to operate as a baby server under floor control of the parent server.

19. A media server of either one of claims 16 - 18, wherein the parent server integrates the floor allocation policies set to the baby servers for setting the floor allocation policy for multimedia, thereby controlling the floor for each medium for synchronous control.

20. A media server of claim 19, wherein the parent server sets a floor allocation policy common to each medium in case of the parent server integrating the floor allocation policies set to the baby servers into a floor allocation policy for multimedia.

21. A media server of either one of claims 16 - 18, wherein the parent server properly edits the floor allocation policies set to the baby servers to set as a floor allocation policy for multimedia and controls the floor for each medium provided by the baby servers for synchronized controlling.

22. A media server of either one of claims 16 - 18, wherein the parent server sets a new floor allocation policy for multimedia regardless of the floor allocation policies set to the baby servers and controls the floor for each medium provided by the baby servers for synchronous controlling.

23. A media server of either one of claims 19 - 22, wherein the media terminal enters a floor allocation policy for multimedia to the parent server as input means for setting the floor allocation policy for multimedia to the parent server.

24. A media server of either one of claims 19 - 22, wherein an operator terminal operated by an operator for controlling the media services is used to input the floor allocation policy for multimedia as input means for setting the floor allocation policy for multimedia to the parent server.

25. A media server of either one of claims 19 - 22, wherein the baby servers or any optional server different from the baby servers are used as input means for setting the floor allocation policy for multimedia to the parent server and enter the floor allocation policy for multimedia to the parent server.

26. A media server of either one of claims 16 - 25, wherein a media portal is disposed between the media terminal and the baby terminals and/or the parent server and any access from the media terminal to the baby terminals and/or the parent terminal is realized by way of the media portal.

27. A media server of either one of claims 16 - 26, wherein a presence server holding at least presence information of the media terminal is disposed and the parent server sets the floor allocation policy for multimedia with reference tc the information from the presence server.

28. In transmitting and receiving a plurality of media for multimedia communication between one or more media server and a media terminal or between different terminals different from the media terminal by way of the media server based on a floor for media allocated to each media as a right to transmit the media,
a media terminal **characterized in that** a synchronous control is performed for integrally allocating the floor for each media to the one or more of the media servers or the media terminal with respect to all media constituting the multimedia communicatior., and the synchronous control enables to transmit all media constituting the multimedia if the floor for each medium of the multimedia communication is integrally allocated to the media terminal, while receiving all of the media constituting the multimedia if the floor for each medium of the multimedia communication is integrally allocated to the media server.

29. A media terminal of claim 28, wherein a floor for each medium provided by the one or more media servers is controlled and transmission of desired media to baby terminals from the one or more media servers is initiated based on the floor control from a parent server for performing a synchronous control.

30. A media terminal of claim 29, wherein instructions are enabled to be entered to the parent server for integrating the floor allocation policies set to the baby servers as the floor allocation policy for multimedia.

31. A media terminal of claim 29, wherein a floor allocation policy common to each media is enabled to be entered to the parent server as the floor allocation policy for multimedia.

32. A media terminal of claim 29, wherein the floor allocation policies for media set to the baby servers are properly edited as the floor allocation policy for multimedia and entered to the parent server.

33. A media terminal of claim 29, wherein the floor allocation policy for multimedia is enabled to be entered to the parent server independent from the floor allocation policies set to the baby servers.

34. A media terminal of either one of claims 28 - 33, wherein the baby servers and/or the parent server are accessed by way of a media portal that acts as a portal site for media disposed between the baby servers and/or the parent server.

35. A media burst control program for multimedia for realizing the processing of media burst control for multimedia of either one of claims 1 - 34 in a computer executable program.

36. A program storage medium for storing the media burst control program for multimedia of claim 35 in a computer readable storage medium.
